Europäisches Patentamt

European Patent Office

Office européen des brevets

(11) Veröffentlichungsnummer: **0 072 399**
**B1**

(12) **EUROPÄISCHE PATENTSCHRIFT**

(45) Veröffentlichungstag der Patentschrift:
**20.03.85**

(21) Anmeldenummer: **82104950.9**

(22) Anmeldetag: **05.06.82**

(51) Int. Cl.⁴: **H 04 J 4/00**

(54) **Digitaler Transmultiplexer.**

(30) Priorität: **17.08.81 DE 3132378**

(43) Veröffentlichungstag der Anmeldung:
**23.02.83 Patentblatt 83/8**

(45) Bekanntmachung des Hinweises auf die Patenterteilung:
**20.03.85 Patentblatt 85/12**

(84) Benannte Vertragsstaaten:
**AT BE CH DE FR GB LI NL**

(56) Entgegenhaltungen:
**US - A - 4 117 541**

**IEEE COMMUNICATIONS MAGAZINE, Band 18, Nr. 1,
Januar 1980, Seiten 5-15, New York, USA
AEÜ, Band 29, Heft 7/8, 1975, Seiten 312-314, Stuttgart,
DE.
INTERNATIONAL CONFERENCE ON
COMMUNICATIONS, Denver, 14.-18. Juni 1981,
Conference Record, Band 1, IEEE, Kat. Nr. 81CH1648-5,
Seiten 7.3.1-7.3.5, New York, USA
CABLES AND TRANSMISSION, Band 29, Nr. 3, Juli 1975,
Seiten 259-265, Paris, FR.**

(73) Patentinhaber: **ANT Nachrichtentechnik GmbH,
Gerberstrasse 33, D-7150 Backnang (DE)**

(72) Erfinder: **Göckler, Heinz, Dipl.-Ing., Eibinger Strasse 52,
D-7150 Backnang (DE)**
Erfinder: **Scheuermann, Helmut, Dipl.-Ing., Schöntaler
Strasse 55, D-7150 Backnang (DE)**

(74) Vertreter: **Schickle, Gerhard, Dipl.-Ing. et al, ANT
Nachrichtentechnik GmbH Patent- und Lizenzabteilung
Gerberstrasse 33, D-7150 Backnang (DE)**

## Beschreibung

Die Erfindung betrifft ein System zur digitalen Umwandlung eines Zeitmultiplexsignals in ein Frequenzmultiplexsignal bzw. umgekehrt nach dem Oberbegriff des Patentanspruchs 1 (Transmultiplexer).

Ein solcher digitaler Transmultiplexer ist durch den Aufsatz „Per-Channel, Memory-Oriented, Transmultiplexer with Logarithmic Processing - Architecture and Simulation" von Carl F. Kurth *et al.* in „Intern. Conf. Communications IEEE", 1981, S. 7.3.1 bis 7.3.5 beschrieben.

Bei dem bekannten Transmultiplexer ist für jeden Kanal als digitales Bandpassfilter zur Interpolation bzw. Dezimation ein Minimumphasenfilter (Finite Impulse Response Filter) mit 434 Verzögerungsgliederzweigen erforderlich, um die gewünschte Frequenzantwortcharakteristik zu erreichen (S. 7.3.2, linke Spalte, zweiter Absatz).

Der Erfindung lag die Aufgabe zugrunde, einen Transmultiplexer der obigen Art anzugeben, der mit unaufwendigen Bandpassfiltern auskommt bei gleichzeitiger Gewährleistung der inneren Stabilität.

Die Lösung erfolgt mit den im Patentanspruch 1 gekennzeichneten Mitteln.

In „IEEE Communications Magazine", vol. 18, Nr. 1, Jan. 1980, S. 5 bis 15, ist durch den Aufsatz von S.L. Freeny „TDM/FDM translation as an application of a digital signal processing" ein Transmultiplexer zur Konvertierung von Zeit- in Frequenzmultiplexsignale und umgekehrt unter Verwendung von Rekursivfiltern beschrieben worden. Diese Rekursivfilter weisen jedoch nicht die spezielle Übertragungsfunktion gemäss vorliegender Anmeldung auf und können auch nicht die innere Stabilität gewährleisten.

Zwar wurde in dem Aufsatz von Alfred Fettweis und Klaus Meerkötter „On Parasitic Oscillations in Digital Filters under Looped Conditions" in „IEEE", 1977, S. 475 bis 481 die Verwendung von Wellendigitalfiltern in 4-Draht-Abschnitten einer Telefonfernleitung und die dabei auftretenden Probleme der Schleifenverstärkung in diesem 4-Draht-Abschnitt grundsätzlich diskutiert, jedoch wurde in dieser Arbeit kein Hinweis auf die Verwendung rekursiver Filteranordnungen in Transmultiplexer gegeben.

Die frühere Arbeit von Meerkötter und Wegener „A New Second-Order Digital Filter without Parasitic Oscillations" in „AEÜ", Bd. 29, 1975, Heft 7/8, S. 312 bis 314, behandelt lediglich ein neues Digitalfilter zweiter Ordnung und stellt einfach anzuwendende Massnahmen vor zur Beherrschung der inneren Stabilität.

Durch die erfindungsgemässe Lösung ergibt sich der Vorteil eines wesentlich kleineren Aufwandes unter Beibehaltung der inneren Stabilität.

In den Unteransprüchen 2 und 3 sind optimale Ausgestaltungen der Erfindung gekennzeichnet.

Durch den Unteranspruch 4 ergibt sich weiterhin ein vorteilhafter Einsatz des erfindungsgemässen Transmultiplexers auf einem 4-Draht-Abschnitt, der beidseitig mittels Gabelschaltungen in eine 2-Draht-Verbindung überführt ist, wobei die Stabilität in der durch den 4-Draht-Abschnitt gebildeten Schleife bezüglich parasitärer Schwingungen sichergestellt ist.

Es folgt die Beschreibung des erfindungsgemässen Systems anhand der Figuren.

Die Fig. 1 zeigt das Blockschaltbild eines Transmultiplexers für 12 Kanäle.

Die Fig. 2 zeigt einige Frequenzspektren für einige ausgewählte Punkte des Transmultiplexers nach Fig. 1.

In Fig. 3 ist das Blockschaltbild für eine vorteilhafte Ausführung des Bandpasses BP nach Fig. 1 dargestellt.

Die Fig. 4 zeigt das Schaltbild eines mit logarithmischer Signalverarbeitung modifizierten Digitalfilters zweiter Ordnung mit der Struktur nach Meerkötter und Wegener.

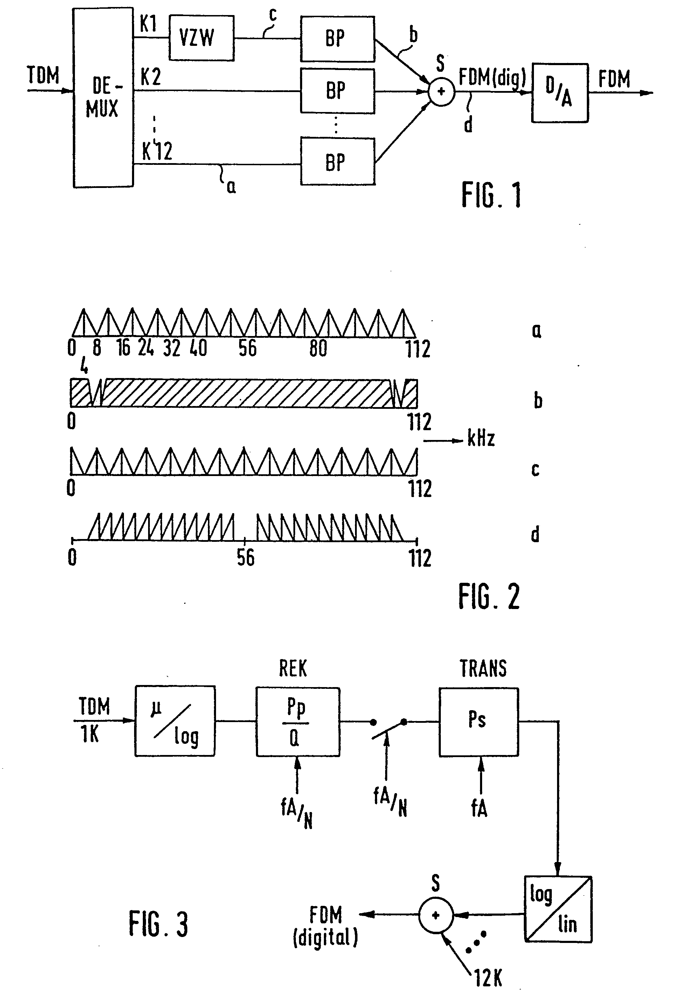

Der Transmultiplexer nach Fig. 1 enthält einen Demultiplexer DEMUX, der das Zeitmultiplexsignal TDM in die einzelnen Zeitmultiplexkanäle mit dem Frequenzspektrum a (s. Fig. 2) zerlegt. Da die Kanäle mit ungerader Zahl ein inverses Spektrum aufweisen, wird dieses mittels Vorzeichenwechsels VZW jedes zweiten Abtastwertes um 4 kHz verschoben (s. Spektrum c in Fig. 2). Anschliessend werden die Kanalsignale mittels Bandpässen BP gefiltert und die Abtastrate auf 112 kHz erhöht (s. Spektrum b in Fig. 2). Die Ausgänge der zwölf Bandpässe werden über ein Summierglied S zum digitalen Frequenzmultiplexsignal FDM (dig) (s. Frequenzspektrum d in Fig. 2) zusammengefasst, welches mittels eines Digital/Analog-Wandlers D/A in das analoge Frequenzmultiplexsignal FDM überführt wird.

Erfindungsgemäss wird der Bandpass BP als Wellendigitalfilter mit der speziellen Übertragungsfunktion

$$H(z) = \frac{U2(z)}{U1(z)} = \frac{P(z)}{Q(z^N)}$$

ausgeführt, wobei U1(z) und U2(z) die Filtereingangs- bzw. -ausgangsspektren mit $z = e^{j2\pi f/fA}$ und f die Kanalsignalfrequenz und fA und fA/N die Abtastfrequenz bzw. die um den Faktor N erniedrigte Abtastfrequenz sind und wobei P(z) und Q(z^N) Polynome von z bzw. z^N sind.

Es folgt nun die Beschreibung eines Ausführungsbeispiels anhand der Fig. 3.

In Fig. 3 ist eine aufwandsgünstige Realisierung eines solchen Filters mit einem Rekursivanteil REK und einem Transversalanteil TRANS in Serienschaltung dargestellt, die mittels logarithmischer Signalverarbeitung operieren und somit den Ersatz von aufwendigen Multiplizierern durch weniger aufwendige Addierer gestatten. Das beispielsweise μ-kurvencodierte Zeitmultiplexsignal eines Kanals TDM 1 K wird mittels eines Wandlers μ/log der Filterkaskade zugeführt, wobei im Rekursivteil REK, durch dessen Übertragungsfunktion

$$\frac{Pp(z^N)}{Q(z^N)}$$

im wesentlichen das Durchlassverhalten bestimmt wird, mit einer kleinen Abtastrate von fA/N = 8 kHz und im nachgeschalteten Transversalteil, durch dessen Übertragungsfunktion Ps(z) im wesentlichen das Sperrverhalten bestimmt wird, mit der hohen Abtastfrequenz fA=112 kHz gearbeitet wird bzw. die Umsetzung auf die hohe Abtastrate erfolgt. Die Übertragungsfunktion der Filterkaskade ist also

$$H(z) = \frac{P(z)}{Q(z^N)} = \frac{Pp(z^N)}{Q(z^N)} \cdot Ps(z)$$

Die Abtastratenerhöhung zwischen den beiden Filterteilen erfolgt beispielsweise durch Einfügen von Abtastwerten Null. Die beiden Filterteile sind verbunden mittels eines Schalters, der ebenfalls synchron mit der kleinen Abtastfrequenz arbeitet. Selbstverständlich kann dieser Schalter wie in der eingangs zitierten Veröffentlichung von Kurth *et al.* mit dem Transversalteil TRANS zusammengefasst bzw. in diesen integriert werden. Ausgangsseitig erfolgt eine Umwandlung von logarithmischer in lineare Signalverarbeitung log/lin. Die so bearbeiteten linearen Kanalsignale werden nunmehr mittels Summierglied S zum digitalen Frequenzmultiplexsignal FDM (dig) zusammengefasst.

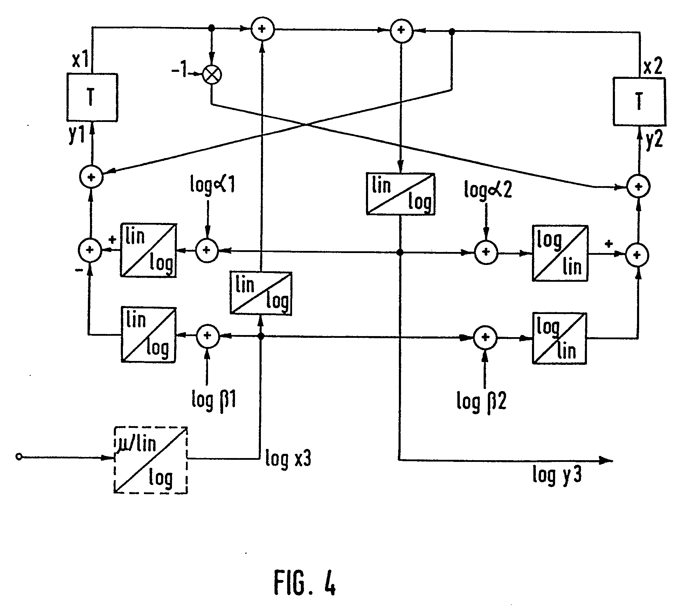

Der Rekursivanteil der Filterkaskade lässt sich vorteilhaft durch Filterblöcke vom Grad 2 gemäss Fig. 4 realisieren.

## Patentansprüche

1. System zur digitalen Umwandlung eines Zeitmultiplexsignals (TDM) in ein Frequenzmultiplexsignal [FDM (dig)], wobei mittels Bandpässen (BP) die einzelnen Signale (c, a) der Zeitmultiplexkanäle (K1,...,K12) gefiltert, deren Abtastfrequenzen um den Faktor N auf fA erhöht und die Ausgangssignale (b) dieser Bandpässe (BP) mittels Summierglied (S) zum Frequenzmultiplexsignal [FDM (dig), d] zusammengefasst werden, und/oder System zur digitalen Umwandlung eines Frequenzmultiplexsignals in ein Zeitmultiplexsignal, wobei mittels Bandpässen das digitalisierte Frequenzmultiplexsignal in die einzelnen Signale der Frequenzmultiplexkanäle zerlegt und seine Abtastfrequenz fA um den Faktor N erniedrigt wird, wobei die Bandpässe als Rekursivfilter ausgebildet sind, dadurch gekennzeichnet, dass die Rekursivfilter die Übertragungsfunktion

$$H(z) = \frac{U2(z)}{U1(z)} = \frac{P(z)}{Q(z^N)}$$

aufweisen, wobei Ua(z) und U2(z) die Filtereingangs- bzw. -ausgangsspektren mit $z=e^{j2\pi f/fA}$ und der Kanalsignalfrequenz f sind und wobei P(z) und Q(z^N) Polynome von z bzw. z^N sind und dass die Rekursivfilter als Wellendigitalfilter ausgeführt sind (Fig. 1).

2. System nach Anspruch 1, dadurch gekennzeichnet, dass die Übertragungsfunktion H(z) als Kaskadenschaltung eines Transversalfilters (TRANS) mit der Übertragungsfunktion Ps(z) und eines Rekursivfilters (REK) mit der Übertragungsfunktion

$$\frac{Pp(z^N)}{Q(z^N)}$$

realisiert ist, so dass

$$H(z) = \frac{P(z)}{Q(z^N)} = \frac{Ps(z) \cdot Pp(z^N)}{Q(z^N)}$$

ist (Fig. 3).

3. System nach Anspruch 2, dadurch gekennzeichnet, dass die Signale im Transversalfilter (TRANS) und/oder im Rekursivfilter (REK) logarithmisch verarbeitet werden (Fig. 3).

4. System zur digitalen Umwandlung eines Zeitmultiplexsignals in ein Frequenzmultiplexsignal und umgekehrt, nach einem der vorhergehenden Ansprüche, gekennzeichnet durch den Einsatz auf einem 4-Draht-Abschnitt, der beidseitig mittels Gabelschaltungen in eine 2-Draht-Verbindung überführt ist.

## Claims

1. System for the digital conversion of a time multiplex signal (TDM) into a frequency multiplex signal [FDM (dig)], wherein the individual signals (c, a) of the time multiplex channels (K1,...,K12) are filtered by means of bandpass filters (BP), their scanning frequencies are increased by the factor N to fA and the output signals (b) of these bandpass filters are combined by means of summating member (S) into the frequency multiplex signal [FDM (dig), d] and/or system for the digital conversion of a frequency multiplex signal into a time multiplex signal, wherein the digitalised frequency multiplex signal is split up by means of bandpass filters into the individual signals of the frequency multiplex channels and its scanning frequency fA is lowered by the factor N, wherein the bandpass filters are constructed as recursive filters, characterised thereby that the recursive filters display the transmission function

$$H(z) = \frac{U2(z)}{U1(z)} = \frac{P(z)}{Q(z^N)}$$

wherein U1(z) and U2(z) are respectively the filter input spectrum and the filter output spectrum with $z=e^{j2\pi f/fA}$ and the channel signal frequency f and wherein P(z) and Q(z^N) are respective polynomials of z and z^N and that the recursive filters are constructed as digital wave filters (Fig. 1).

2. System according to Claim 1, characterised thereby that the transmission function H(z) is realised as a cascade connection of a transverse filter (TRANS) with the transmission function Ps(z) and a recursive filter (REK) with the transmission function

$$\frac{Pp(z^N)}{Q(z^N)}$$

so that

$$H(z) = \frac{P(z)}{Q(z^N)} = \frac{Ps(z) \cdot Pp(z^N)}{Q(z^N)}$$

(Fig. 3).

3. System according to Claim 2, characterised thereby, that the signals in the transverse filter (TRANS) and/or in the recursive filter (REK) are processed logarithmically (Fig. 3).

4. System for the digital conversion of a time multiplex signal into a frequency multiplex signal and conversely according to one of the preceding claims, characterised by the use on a 4-wire section which is converted at both sides by means of fork terminations into a 2-wire connection.

## Revendications

1. Système pour la conversion numérique d'un signal de multiplexage dans le temps (TDM) en un signal de multiplexage en fréquences [FDM (num)], où, au moyen de filtres passe-bande (BP), les différents signaux (c, a) des voies dérivées en temps (K1,...,K12) sont filtrés, leurs fréquences d'échantillonnage sont augmentées du facteur N à fA et les signaux de sortie (b) de ces filtres passe-bande (BP) sont réunis au moyen d'un additionneur (S) pour former le signal de multiplexage en fréquence [FDM (num), d], et/ou système pour la conversion numérique d'un signal de multiplexage en fréquences en un signal de multiplexage dans le temps, où, au moyen de filtres passe-bande, le signal numérisé de multiplexage en fréquences est décomposé en les différents signaux des voies dérivées en fréquences, et sa fréquence d'échantillonnage fA est abaissée du facteur N, avec réalisation des filtres passe-bande sous forme de filtres récursifs, caractérisé en ce que les filtres récursifs présentent la fonction de transfert

$$H(z) = \frac{U2(z)}{U1(z)} = \frac{P(z)}{Q(z^N)}$$

où U1(z) et U2(z) sont, respectivement, les spectres d'entrée et de sortie du filtre avec $z = e^{j2\pi f/fA}$ et la fréquence du signal de voie f, et où P(z) et Q(z^N) sont des polynômes de z et de z^N respectivement, et en ce que les filtres récursifs sont réalisés sous forme de filtres d'ondes numériques (fig. 1).

2. Système selon la revendication 1, caractérisé en ce que la fonction de transfert H(z) est réalisée comme un montage en cascade d'un filtre transversal (TRANS) ayant la fonction de transfert Ps(z) et d'un filtre récursif (REK) ayant la fonction de transfert

$$\frac{Pp(z^N)}{Q(z^N)}$$

de sorte que

$$H(z) = \frac{P(z)}{Q(z^N)} = \frac{Ps(z) \cdot Pp(z^N)}{Q(z^N)}$$

(fig. 3).

3. Système selon la revendication 2, caractérisé en ce que les signaux subissent un traitement logarithmique dans le filtre transversal (TRANS) et/ou dans le filtre récursif (REK) (fig. 3).

4. Système pour la conversion numérique d'un signal de multiplexage dans le temps en un signal de multiplexage en fréquences et inversement, selon l'une des revendications précédentes, caractérisé par son application à un tronçon de liaison à quatre fils qui est transformé des deux côtés en une liaison à deux fils au moyen de termineurs.

0 072 399

FIG. 1

FIG. 2

FIG. 3

5

FIG. 4